# EUROPEAN PATENT SPECIFICATION

(11) **EP 1 974 998 B1**
(45) Date of publication and mention of the grant of the patent: **25.05.2011**
(21) Application number: 08004495.1
(22) Date of filing: 11.03.2008
(51) Int. Cl.: B60R 1/00, B60Q 1/52

(54) **Driving support method and driving support apparatus**
Fahrunterstützungsverfahren und Fahrunterstützungsvorrichtung
Procédé d'assistance à la conduite et appareil d'assistance à la conduite

(30) Priority: 26.03.2007 JP 2007080008; 07.08.2007 JP 2007205672
(43) Date of publication of application: 01.10.2008
(73) Proprietor: Aisin AW Co., Ltd., Fujii-cho Anjo-shi, Aichi 444-1192 (JP)
(72) Inventor: Okabe, Hidefumi, Okazaki-shi Aichi 444-8564 (JP); Takagi, Minoru, Okazaki-shi Aichi 444-8564 (JP)
(74) Representative: Kramer - Barske - Schmidtchen

(56) References cited:
- EP-A- 1 285 814
- DE-A1-102005 006 648
- JP-A- 11 115 546
- US-A1- 2003 151 563

## Description

### BACKGROUND OF THE INVENTION

### 1. Field of the Invention

The present invention relates to a driving support method and a driving support apparatus.

### 2. Description of the Related Art

As an example of an apparatus supporting safe driving, an in-vehicle system for capturing an image of an area which is hidden as a blind spot of a driver of the vehicle with an in-vehicle camera and displaying the image on a display monitor is known. As one such system, a system that captures an image of an area which is hidden as a blind spot of a driver of a vehicle arising because of the presence of a pillar in the vehicle with an in-vehicle camera and displays the image on a medial side of the pillar has been suggested (for example, Japanese Unexamined Patent Application Publication No. 2005-184225). Such a pillar is located to each of the right and left of the driver to support windows and the roof of the vehicle and might obstruct the driver's view. However, the pillar needs to have a certain thickness to ensure the safety of the driver. Further, according to such an apparatus, the direction in which the camera is pointing does not necessarily coincide with the direction in which eyes of the driver are looking, so that the image which was captured by the camera is converted into coordinate values matching the driver's eye direction.

However, according to the apparatus described above, a case when the driver looks at an area behind the vehicle or at an area to the rear of the vehicle in a rear-view mirror is not considered. That is, when the driver looks at the area behind the vehicle or at the area to the rear of the vehicle in the rear-view mirror, a rear pillar which is located in the back of the vehicle and/or a center pillar which is located between a front seat and a rear seat might obstruct the driver's view through the rear-view mirror.

EP-A-1 285 814 relates to a driving support method comprising extracting a camera image of an area which is hidden for a driver of a vehicle arising, because of the presence of a pillar, based on the positions of the head and/or the eyes of the driver and displaying the extracted image on a display installed on an inner surface of the vehicle.

US 2003/151563 A1 discloses determining the driver's viewpoint based on the position of the rear-view mirror and the positions of the respective parts of the seat.

To solve the problem described above, there is another method for projecting an image which is generated for the driver looking at the area behind the vehicle or the area to the rear of the vehicle in the rear-view mirror to the rear pillar and/or the center pillar and for letting the driver see the projected image with using the rear-view mirror. However, the driver's range of view and the driver's eye direction in case of seeing such area in the rear-view mirror are different from the driver's range of view and the driver's eye direction in case of directly seeing such area, so that the driver may feel some discomfort about using this method because the image projected on the pillar is significantly different from the real view.

### SUMMARY OF THE INVENTION

Accordingly, it is an object of the present invention to provide a driving support method and a driving support apparatus for displaying an image of an area which is hidden as a blind spot of a driver of a vehicle arising because of the presence of a pillar in the vehicle even if there is such a blind spot for the driver in a rear-view mirror while the driver looks at an area surrounding the vehicle in the rear-view mirror.

To solve the problems described above, various exemplary implementations of the principles described herein provide a driving support method for capturing an image of an area which is hidden as a blind spot of a driver of a vehicle arising because of the presence of a pillar of the vehicle using an imaging device which is attached to the vehicle and displaying the image provided by the imaging device on a medial side of the pillar, including: detecting a position of the driver; obtaining an angle of a mirror which is mounted in the vehicle; calculating an area which is hidden as a blind spot of the driver of the vehicle arising because of the presence of a pillar of the vehicle in the mirror on the basis of the position of the driver and the angle of the mirror, provided that the driver is looking at an area surrounding the vehicle through the mirror; and displaying an image corresponding to the calculated blind spot area on a medial side of the pillar from image data which is captured by the imaging device.

Various exemplary implementations of the principles described herein provide a driving support apparatus for capturing an image of an area which is hidden as a blind spot of a driver of a vehicle arising because of the presence of a pillar of the vehicle using an imaging device which is attached to the vehicle and displaying an image which is provided by the imaging device on a medial side of the pillar by a display device, including: a driver's position detecting device for detecting a position of the driver; a mirror position detecting device for detecting an angle of a mirror which is mounted in the vehicle; a blind spot calculating device for calculating an area which is hidden as a blind spot of the driver of the vehicle arising because of the presence of the pillar in the mirror on the basis of the position of the driver and the angle of the mirror, provided that the driver is looking at an area surrounding the vehicle through the mirror; an image synthesis device for generating an image of a blind spot corresponding to the area which is hidden as a blind spot of the driver of the vehicle arising because of the presence of the pillar in the mirror, using image data which is provided by the imaging device; and an image outputting device for outputting the image of the blind spot to the display device.

Various exemplary implementations of the principles described herein provide the driving support apparatus, further including: a range of view calculating device for calculating a range of view which the driver is able to see through the mirror on the basis of the position of the driver and the angle of the mirror, wherein: the blind spot calculating device determines that the pillar is located within the range of view and calculates the area which is hidden as a blind spot of the driver of the vehicle arising because of the presence of the pillar on the basis of the position of the driver and the angle of the mirror; and the image outputting device displays the image of the blind spot on the pillar.

Various exemplary implementations of the principles described herein provide the driving support apparatus, further including: a vehicle condition determining device for determining whether the vehicle changes traffic lanes, wherein: provided that the vehicle condition determining device determines that the vehicle is changing traffic lanes, the image of the blind spot corresponding to the area which is hidden as a blind spot of the driver of the vehicle arising because of the presence of the pillar in the mirror is output on the pillar.

Various exemplary implementations of the principles described herein provide the driving support apparatus, further including: an obstacle detecting device for detecting an obstacle which is located behind the vehicle or in the rear side of the vehicle, wherein: provided that the obstacle detecting device detects an obstacle which is located behind the vehicle or to the rear side of the vehicle, the image synthesis device sets a virtual flat surface which is for converting the image data into coordinate values at a position of the obstacle.

According to the present invention, an area which is hidden as a blind spot of a driver of a vehicle arising because of a presence of a pillar in a rear-view mirror is calculated on the basis of a position of the driver and an angle of the rear-view mirror. Further, an image of the area which is hidden as a blind spot of the driver is displayed on a medial side of the pillar, so that the area which is hidden as a blind spot of the driver may be covered even when the driver looks at an area behind the vehicle in the rear-view mirror.

According to the present invention, the driving support apparatus calculates an area which is hidden as a blind spot of a driver of a vehicle arising because of a presence of a pillar in a rear-view mirror on the basis of a position of the driver and an angle of the rear-view mirror. Further, an image of the area which is hidden as a blind spot of the driver is displayed on the medial side of the pillar, so that the area which is hidden as a blind spot of the driver may be covered even when the driver looks at an area behind the vehicle in the rear-view mirror.

According to the present invention, an image of the area which is hidden as a blind spot of the driver is displayed on a surface of a pillar which is included within a range of view with using a mirror. Therefore, according to a pillar which is not included within the range of view with using the mirror, a calculating processing and a display processing of an area which is hidden as a blind spot arising because of the presence of the pillar may be omitted, so that the amount of the entire processing may be reduced.

According to the present invention, when a vehicle changes traffic lanes, an image of an area which is hidden as a blind spot of a driver is displayed. Therefore, when the driver looks at an area behind the vehicle and/or an area in the rear side of the vehicle in a mirror, it may be possible for the driver to check that another vehicle is located in the area behind of the vehicle or in the rear side of the vehicle of the driver.

According to the present invention, when an obstacle is detected within an area behind the vehicle or within an area in the rear side of the vehicle, a virtual flat surface is set at the position of the obstacle. Therefore, it may be possible to project a clear image which is with the obstacle at its center on a medial side of a pillar.

### BRIEF DESCRIPTION OF THE DRAWINGS

FIG. 1 is a block diagram showing a driving support system of a current embodiment.

FIG. 2 is a plan view showing a vehicle on which the driving support system is installed.

FIG. 3 is a conceptual diagram showing an area which is hidden as a blind spot arising because of a presence of a front pillar.

FIG. 4 is a conceptual diagram showing a range of view of a rear-view mirror.

FIG. 5 is a conceptual diagram showing an area which is hidden as a blind spot arising because of a presence of a pillar in the rear-view mirror.

FIG. 6 is a conceptual diagram showing an area which is hidden as a blind spot arising because of a presence of a side pillar and a rear pillar.

FIG. 7 is a conceptual diagram showing a virtual flat surface and an area photographed by a camera.

FIG. 8 is a conceptual diagram showing the virtual flat surface and the area photographed by the camera when the vehicle changes traffic lanes.

FIG. 9 is a diagram showing a mask pattern.

FIG. 10 is a front view of a screen which is attached on a pillar.

FIG. 11 is a flowchart showing procedures in the current embodiment.

FIG. 12 is a view showing a frame format of an image of a blind spot in the rear-view mirror.

### DESCRIPTION OF THE PREFERRED EMBODIMENTS

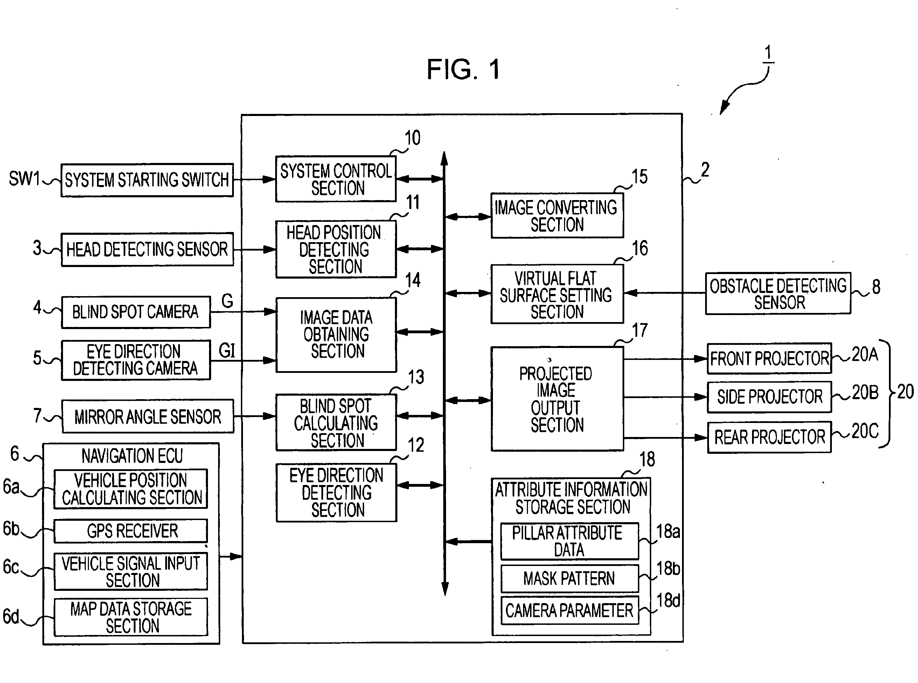

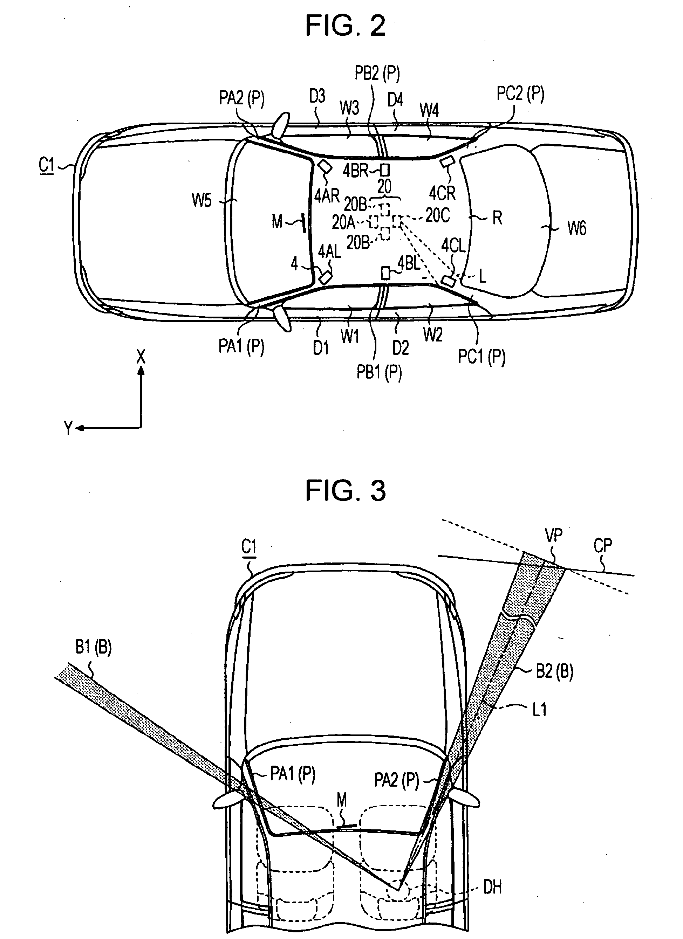

An embodiment of the present invention will be described with reference to FIGs. 1 through 12 in detail below. FIG. 1 is a block diagram showing a structure of a driving support system 1 which is installed in a vehicle C1 (FIG. 2).

The driving support system 1 is installed in the vehicle C1 and may include a driving support unit 2 as a driving support device, a head detecting sensor 3, a blind spot camera 4 as an imaging device, an eye direction detecting camera 5, a mirror angle sensor 7, an obstacle detecting sensor 8, a navigation ECU 6, and a projector 20 as a display device and a projecting device as shown in FIG. 1.

The driving support unit 2 may include a system control section 10 as vehicle condition determining means, a head position detecting section 11 as driver position detecting means, an eye direction detecting section 12, a blind spot calculating section 13 as mirror position detecting means, blind spot calculating means, and range of view calculating means, and an image data obtaining section 14. The driving support unit 2 may further include an image converting section 15 as image synthesis means and image outputting means, a virtual flat surface setting section 16 as image synthesis means, image outputting means, and obstacle detecting means, a projected image outputting section 17 as image synthesis means and image outputting means, and an attribute data storage section 18. The system control section 10 starts a covering operation for an area which is hidden as a blind spot which is operated by the driving support system 1 when a system starting switch SW 1 which is installed on an instrument panel of the vehicle C1 or in a steering column of the vehicle C1 or in a navigation apparatus (not shown) is operated. When the vehicle C1 changes traffic lanes, the covering operation of the area which is hidden as a blind spot is started as well. When the vehicle C1 determines that the vehicle C1 is approaching an intersection or a curve, the navigation ECU 6 outputs a support starting signal to the system control section 10. The system control section 10 which received the signal starts the covering operation of the area which is hidden as a blind spot. Further, it may be possible to start the covering operation of the area which is hidden as a blind spot when a shift position of the vehicle C1 is switched to "reverse".

The navigation ECU 6 may include a vehicle position calculating section 6a, a GPS receiver 6b, a vehicle signal inputting section 6c, and a map data storage section 6d. The vehicle position calculating section 6a calculates an absolute position of the vehicle C1 using the GPS receiver 6b. The vehicle signal inputting section 6c receives a vehicle speed pulse and a direction detecting signal from a vehicle speed sensor and/or a gyro (not shown) both of which are attached to the vehicle C1. The vehicle position calculating section 6a receives the vehicle speed pulse and the direction detecting signal from the vehicle signal inputting section 6c, calculates a relative position of the vehicle compared to an origin position, and specifies the position of the vehicle on the basis of both of the relative position calculated above and the absolute position which has been calculated by means of the GPS receiver 6b.

In the map data storage section 6d, route data for searching for a route to a destination and map drawing data for outputting a map on a display (not shown) are stored. A route searching section (not shown) which is mounted in the navigation ECU 6 searches for a route to a destination on the basis of route data. The vehicle position calculating section 6a determines, for example, whether the vehicle C1 is approaching a predetermined point such as an intersection or a curve to be covered using route data and map drawing data because the predetermined point is within an area which is hidden as a blind spot.

The head position detecting section 11 receives an input of a detecting signal from the head detecting sensor 3 and detects a head position of the driver. The head detecting sensor 3 may include an ultrasound sensor and a plurality of the head detecting sensors 3 are attached to an area surrounding a driver's seat in the vehicle. Ultrasound emitted from the head detecting sensor 3 is reflected from the head of the driver, so that the head detecting sensor 3 calculates a time between when the ultrasound was emitted and when the reflection was received by the head detecting sensor 3. The head position detecting section 11 calculates a relative distance to the head of the driver on the basis of the calculated time output by the head detecting sensor 3 by means of a heretofore known method such as a triangulation method.

The eye direction detecting section 12 detects an eye direction of the driver. Specifically, the eye direction detecting section 12 receives an input of image data GI from the eye direction detecting camera 5 which is mounted in the vehicle. The eye direction detecting camera 5 is mounted on an instrument panel at an appropriate position and an appropriate angle for capturing an image of a face and/or an eye of the driver. When the eye direction detecting section 12 inputs image data GI which is an image of the face and/or the eye of the driver, the eye direction detecting section 12 determines the direction of the driver's face and the position of the driver's eye, that is, the eye direction of the driver, by means of a heretofore known image processing method. For example, when the eye direction of the driver is within a predetermined angle range relative to a direction parallel to a length direction of the vehicle C1 (Y-arrow direction in FIG. 2), it is determined that the driver is looking at the area in front of the vehicle. When the eye direction detecting section 12 determines that the eye direction of the driver is toward a rear-view mirror M (FIG. 2) on the basis of a position of the rear-view mirror M which has been stored in advance, it is determined that the driver is looking at the rear-view mirror M. Further, for example, in the case in which the eye direction detecting camera 5, which is attached in front of the driver, detects a side of the face of the driver by means of image processing, it is determined that the driver is looking at an area which is behind the vehicle or an area which is to the rear of the vehicle.

The blind spot calculating section 13 calculates an area which is hidden as a blind spot arising because of the presence of a pillar P in the vehicle C1 (FIG. 2) on the basis of the eye direction of the driver. According to the present embodiment, six pillars P are mounted in the vehicle C1 as shown in FIG. 2; two front pillars (A pillars) PA1 and PA2, two center pillars (B pillars) PB1 and PB2, and two rear pillars (C pillars) PC1 and PC2. The front pillar PA1 is mounted on the left in front of the driver's seat and the front pillar PA2 is mounted on the right in front of the driver's seat. The center pillar PB1 is mounted between a front door D1 and a rear door D2 on the left side of the vehicle and the center pillar PB2 is mounted between a front door D3 and a rear door D4 on the right side of the vehicle. The rear pillar PC1 is mounted between a window W2 of the rear door D2 and a rear window W6 and the rear pillar PC2 is mounted between a window W4 of the rear door D4 and the rear window W6.

For example, when the driver faces forward, the blind spot calculating section 13 reads out pillar attribute data 18a corresponding to two of the front pillars PA1 and PA2 from the attribute data storage section 18. Note that, in the attribute data storage section 18, three-dimensional coordinate data and shape data corresponding to the left front pillar PA1, the right front pillar PA2, the left center pillar PB1, the right center pillar PB2, the left rear pillar PC1, and the right rear pillar PC2 is stored as pillar attribute data 18a. For example, pillar attribute data 18a is pattern data and/or coordinate data of an outline of the pillar P. Specifically, the three-dimensional coordinates of the outline of the pillar P (coordinates in the length direction of the pillar P, the width direction of the pillar P, and vertical direction) and the length and the width of the pillar P are indicated as the data.

The blind spot calculating section 13 receives the head position of the driver from the head position detecting section 11 and calculates areas B1 and B2 which are hidden as blind spots arising because of the presence of the left front pillar PA1 and the right front pillar PA2 as shown in FIG. 3 on the basis of the head position and the positions of the front pillars PA1 and PA2. In this case, for example, the areas B1 and B2 may be specified by connecting a center point of the head position DH and a plurality of representative points which are set on the front pillar PA1 and PA2 with straight lines or by means of another calculating method.

When the eye direction detecting section 12 determines that the driver is facing toward the rear-view mirror M, the blind spot calculating section 13 calculates each of areas which are hidden as blind spots arising because of the presence of the center pillars PB1 and PB2 and the rear pillars PC1 and PC2 in the rear-view mirror M. That is, when the driver looks at the rear-view mirror M, any one of or a plurality of the center pillars PB1 and PB2 and the rear pillars PC1 and PC2 are shown in the rear-view mirror M, depending on the angle of the mirror. When at least one of the center pillars PB1 and PB2 and the rear pillars PC1 and PC2 is shown in the rear-view mirror M, the blind spot calculating section 13 calculates the area(s) which is hidden as a blind spot arising because of the presence of the pillar(s) P in the mirror.

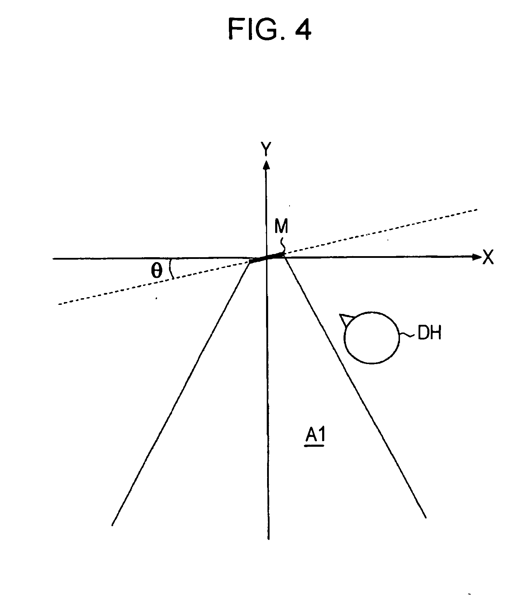

The blind spot calculating section 13 obtains the angle of the rear-view mirror M from the mirror angle sensor 7 (FIG. 1). The mirror angle sensor 7 is attached to an angle adjusting section of the rear-view mirror M and detects a rotation angle θ relative to an axis that is parallel to a direction of the vehicle width (X-arrow in FIG. 4) as shown in FIG. 4. The mirror angle sensor 7 further detects a declination angle φ (not shown) beeing an angle (slope) relative to a vertical direction of the rear-view mirror M.

The blind spot calculating section 13 calculates a range of view A1 which is an area the driver is able to look at in the rear-view mirror M on the basis of the rotation angle θ and the declination angle φ, both of which having been obtained from the mirror angle sensor 7. That is, as shown in FIG. 4, the blind spot calculating section 13 obtains the head position DH of the driver, calculates, for example, the maximum incidence angle and the minimum incidence angle at which the driver's eye intersects the plane of the driver's eye direction relative to the rear-view mirror M on the basis of the driver's head position DH, the rotation angle θ of the rear-view mirror M, and the declination angle φ of the rear-view mirror M. Then finally the range of view A1 which is the area the driver is able to look at from the calculated head position DH is calculated. That is, the range of view A1 may change depending on the head position DH. For example, even if the angle of the rear-view mirror M is preset for the driver to see the same view as a real view which may be seen from the rear window W6, if the head position DH moves in the direction of the right front door D3 (the direction of X arrow in FIG. 4), the incidence angle of the driver's eye direction relative to the rear-view mirror M becomes smaller. Therefore, the range of view A1 moves a little to the left (in the direction opposite to the X arrow). Note that, the blind spot calculating section 13 may store the range of view A1 of the rear-view mirror M on the basis of an initial position of the rear-view mirror M and change the range of view A1 at the initial position depending on the head position DH. When the rear-view mirror M has a convex mirror whose curvature radius is relatively large, the blind spot calculating section 13 may calculate the range of view A1 with consideration of the attribute of the rear-view mirror M.

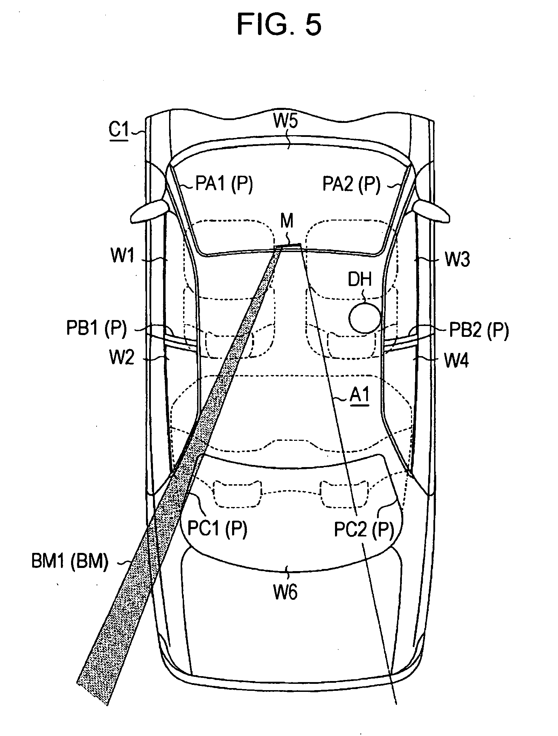

The blind spot calculating section 13 further determines whether at least a part of the center pillars PB1, PB2, and the rear pillars PC1, PC2 is included within the range of view A1 of the rear-view mirror M. As described above, when the driver's head position DH moves slightly to the right away from the normal position (in the direction of the X arrow in FIG. 4), the range of view A1 moves to the left (in the direction opposite to X arrow in FIG. 4), so that the left rear pillar PC1 may be included within the range of view A1. In this case, as shown in FIG. 5, the blind spot calculating section 13 calculates an area BM which is hidden as a blind spot arising because of the presence of the left rear pillar PC1 in the rear-view mirror M on the basis of both of the head position DH and pillar attribute data 18a. For example, the blind spot calculating section 13 connects a plurality of representative points which are set on the left rear pillar PC1 and a driver's virtual eye point which is set on the upper side of the rear-view mirror M or inside of the rear-view mirror M with straight lines and the area which is surrounded by such straight lines is set as the area BM1 which is hidden as a blind spot in the mirror. Note that, the area BM which is hidden as a blind spot in the mirror may be calculated by means of another calculating method on the basis of the driver's eye direction and the head position DH.

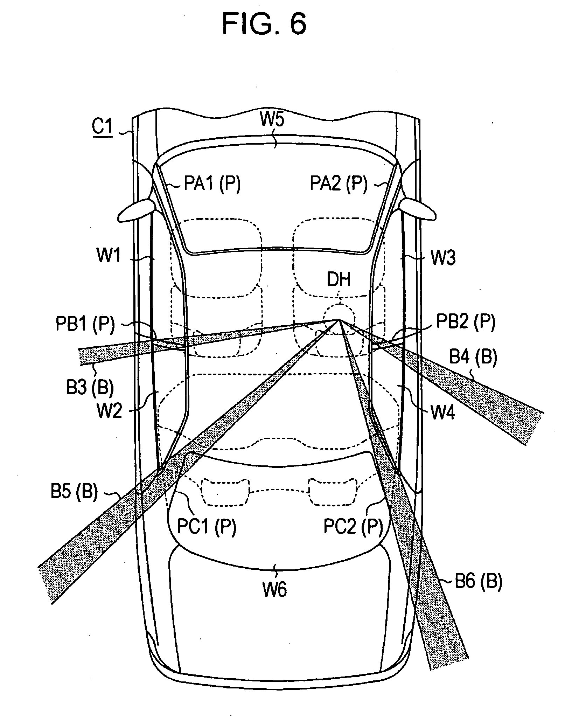

When the eye direction detecting section 12 determines that the driver is looking directly backward without using the mirror, as shown in FIG. 6, the blind spot calculating section 13 calculates an area B which is hidden as a blind spot arising because of the presence of the center pillars PB1, PB2, and the rear pillars PC1, PC2. For example, the blind spot calculating section 13 may obtain the head position DH from the head position detecting section 11 and determine areas B3 through B6 which are hidden as blind spots by connecting the head position DH and a plurality of representative points which are set on the center pillars PB1, PB2 and the rear pillars PC1, PC2 with straight lines.

The virtual flat surface setting section 16 sets a virtual flat surface VP to convert image data G which has been obtained by the image data obtaining section 14 into coordinate values. For example, when the driver is looking directly forward, as shown in FIG. 3, the virtual flat surface VP is set at a certain position which is in front of the vehicle C1 and is a predetermined distance away from the vehicle C1. For example, the virtual flat surface VP is set at a position at which the virtual surface VP intersects at right angles a center line L1 of the area B2 which is hidden as a blind spot. Note that, the only virtual flat surface VP for projecting an image of the blind spot on the right front pillar PA2 is shown in FIG. 3 as a matter of convenience. However, in fact, two of the virtual flat surfaces VP are set for each of the area B1 corresponding to the front pillar PA1 and the area B2 corresponding to the front pillar PA2.

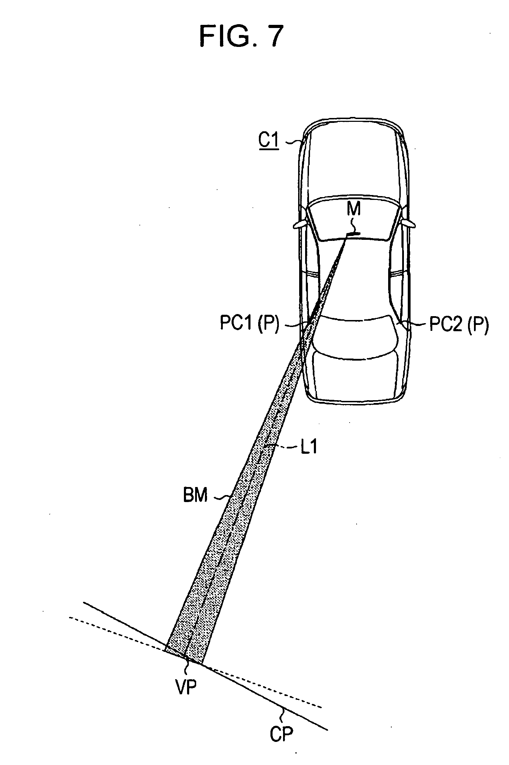

When the driver looks at the area behind the vehicle or the area in the rear side of the vehicle by using the rear-view mirror M, as shown in FIG. 7, the virtual flat surface VP is set at a position which is behind the vehicle C1 and is a predetermined distance away from the vehicle C1 or otherwise the virtual flat surface setting section 16 may obtain a position of a reference object such as a pedestrian crossing which is painted on a road surface at an intersection from the navigation ECU 16 and set the virtual flat surface VP at the position of the reference object.

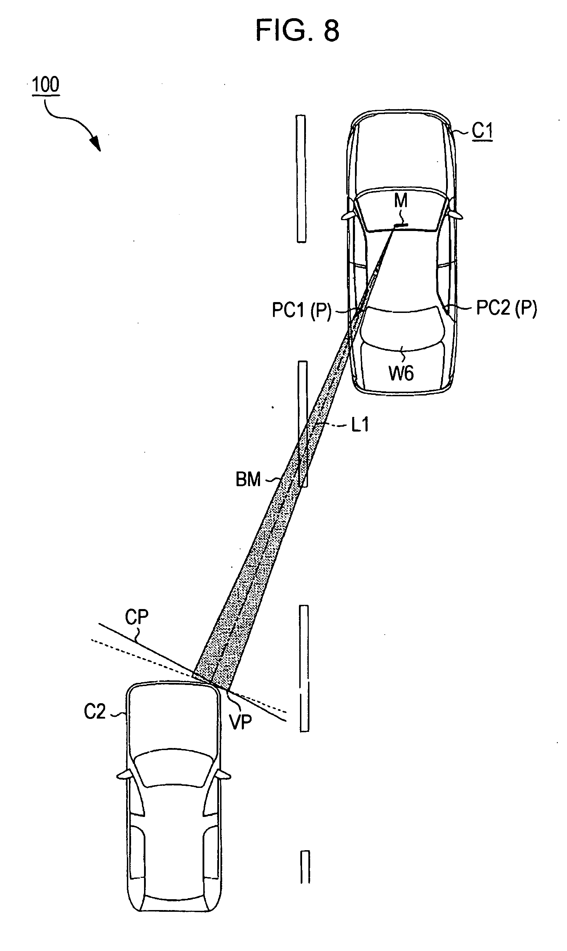

When the vehicle C1 changes traffic lanes, the virtual flat surface setting section 16 sets the virtual flat surface VP at a position of another vehicle C2 (FIG. 8) as an obstacle which is approaching the vehicle C1 from behind. Specifically, it is determined whether the vehicle C1 changes traffic lanes on the basis of a direction change signal which is input from a direction indicator of the vehicle C1 by means of the system control section 10 and the navigation ECU 6. When it is determined that the vehicle C1 is changing traffic lanes, the virtual flat surface setting section 16 obtains the detecting signal from the obstacle detecting sensor 8 (FIG. 1) and determines whether the other vehicle C2 exists behind of the vehicle C1 or to the rear side of the vehicle C1. The obstacle detecting sensor 8 is a millimeter wave radar or a sonar and is mounted on the rear side of the vehicle. When there is the other vehicle C2 behind the vehicle C1 or to the rear of the vehicle C1, the virtual flat surface setting section 16 calculates the relative distance between the vehicle C1 and the other vehicle C2 and sets the virtual flat surface VP at a predetermined point on the other vehicle C2 as shown in FIG. 8. Because the virtual flat surface VP has been set, it is possible to project the image of the other vehicle C2 onto the pillar P without being misaligned from the real view including the other vehicle C2 through the rear window W6 or without being twisted.

The virtual flat surface setting section 16 further sets a position of an area photographed by the camera CP on the basis of the position of the virtual flat surface VP. The area photographed by the camera CP indicates a point of focus of the blind spot camera 4. The image data G which is a captured image, focusing on the position of the area photographed by the camera CP is converted into coordinate values on the virtual flat surface VP, so that the virtual flat surface setting section 16 sets the area photographed by the camera CP at a point which is close to the virtual flat surface VP within the area which is hidden as a blind spot B2. In FIG. 3 and FIG. 7, the area photographed by the camera CP is set, passing through one side of a range which is a section divided by a mirror blind spot area BM within the virtual flat surface VP.

The image data obtaining section 14 obtains the image data G from each of the blind spot cameras 4 mounted on the vehicle C1. As shown in FIG. 2, according to the current embodiment, the six blind spot cameras 4 are mounted on the vehicle C1 so as to correspond to the six pillars P. A left front camera 4AL is mounted near the left front pillar PA1 and a right front camera 4AR is mounted near the right front pillar PA2, so that the two cameras may capture images of the areas which are hidden as blind spots arising because of the presence of the front pillars PA1 and PA2. A left side camera 4BL is mounted near the left center pillar PB1 and a right side camera 4BR is mounted near the right center pillar PB2, so that the two cameras may capture images of areas which are hidden as blind spots arising because of the presence of the center pillars PB1 and PB2. A left rear camera 4CL is mounted near the left rear pillar PC1 and a right rear camera 4CR is mounted near the right rear pillar PC2, so that the two cameras may capture images of areas which are hidden as blind spots arising because of the presence of the rear pillars PC1 and PC2.

After obtaining the position of the area photographed by the camera CP from the virtual flat surface setting section 16, the image data obtaining section 14 controls the corresponding blind spot camera 4 to capture an image, focusing on the position of the area photographed by the camera CP and outputs the image to the image converting section 15.

A camera parameter 18d (FIG. 1) indicating the positions and angles of the blind spot cameras 4 is stored in the attribute data storage section 18.

The image converting section 15 obtains the image data G which is captured by the blind spot camera 4 from the image data obtaining section 14. The image converting section 15 further obtains the blind spot area B or the mirror blind spot area BM from the blind spot calculating section 13. The image converting section 15 generates images of the blind spots which correspond to the blind spots B and BM from the obtained image data G and converts the blind spot images into coordinate values on the virtual flat surface VP which has been set by the virtual flat surface setting section 16. The coordinate conversion is a processing to convert pixel data of the blind spot image into pixel data for the virtual flat surface VP.

The image converting section 15 converts the image, which has been projected on the virtual flat surface VP once, so that it is projected on the surface (especially including the medial surface) of the pillar P. The part of the surface of the pillar onto which the image is projected may be set on the basis of the 3D coordinates of the pillar attribute data 18a.

Next, to project the image described above which has been converted for the surface of the pillars by each of the projectors 20, the image is performed the coordinate conversion on the basis of the position of the projector 20. Note that, as shown in FIG. 2, the four projectors 20 are located on an medial surface of the roof of the vehicle C1, facing to four different pillars P to project the image on the medial surfaces of the pillars P.

That is, the image displayed on an medial surface Pa is twisted, enlarged, or narrowed depending on an incident angle of a light which is output from the projector 20 into the medial surface of the pillar P. Therefore, for example, a relation map in which coordinates of each pixel data of the converted image to be projected is related with coordinates of each pixel data of the image which is output from the projector 20 in advance is stored in an internal memory of the image converting section 15 in advance. The converted image to be projected may be further converted into coordinate values as the image which is output from the projector 20 on the basis of the relation map.

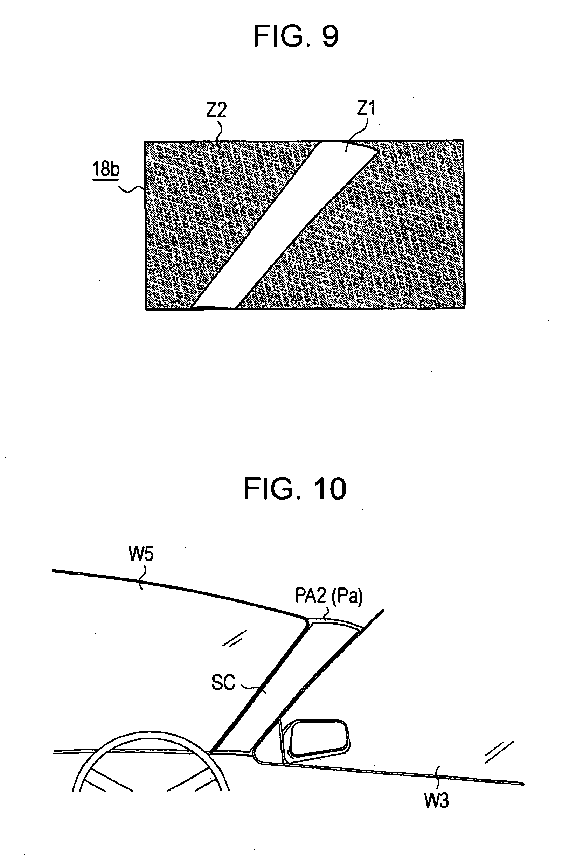

The image which has been converted into coordinate values by the image converting section 15 is output to the projected image outputting section 17. The projected image outputting section 17 generates images of blind spots which are output from each of the projectors 20 on the basis of the mask pattern 18b which is read out from the attribute data storage section 18. As shown in FIG. 9, the mask pattern 18b is data for masking the blind spot image and includes an image display range Z1 which is located along the medial outline of the pillar P and a mask Z2. The projected image outputting section 17 generates projected data to project the blind spot image only on the pillar P by reading the blind spot image for the image display range Z1 By reading data for an area corresponding to the mask Z2, any image which is sent from the projector 20 is not displayed in the masked area. After generating such projected data, the projected image outputting section 17 outputs the projected data to each of the projector 20.

Note that, according to the current embodiment, the vehicle C1 has a front projector 20A, a side projector 20B, and a rear projector 20C. Each of the front projectors 20A is mounted to project images on the surfaces of the front pillars PA1 and PA2. Each of the side projectors 20B is mounted to project images on the surfaces of the center pillars PB1 and PB2. Each of the rear projectors 20C is mounted to project images on the surfaces of the rear pillars PC1 and PC2. According to the current embodiment, four of the projectors 20 are mounted. However, if one projector is able to project images on the surfaces of a plurality of the pillars P, the vehicle may have only one projector. Meanwhile, the vehicle may have a plurality of projectors other than four.

As shown in FIG. 10, screens SC are pasted up on the medial surfaces Pa of the pillars P, being fitted shapes of the outlines of the pillars P. A focal point of each of the projectors 20 is adjusted to the screen SC which is pasted up on the pillar P. Note that, when the medial surface Pa of the pillar P is made of any material which is able to display a clear image by receiving a light which is output from the projector 20 and when the medial surface Pa of the pillar P is smooth enough to display such a clear image, the screen SC may not be necessary.

As shown in FIG. 2, the projector 20 projects the image on the screen SC by outputting a projection light L toward the screen SC on the pillar P. In this case, the image is not projected on windows surrounding the screen SC because the image is set not to be projected due to the mask Z2 of the mask pattern 18b. When the driver directly looks at the area in front of the vehicle C1 or the area behind the vehicle, the driver may directly look at the image of such areas because the images are projected on the pillars P. When the driver looks at the area behind the vehicle and the area in rear side of the vehicle through the rear-view mirror M, the images corresponding to the driver's eye direction are projected on the pillars P, so that the driver may look at the images of the area which are hidden as blind spots arising because of the presence of the pillars through the rear-view mirror M on the surface of the pillars P.

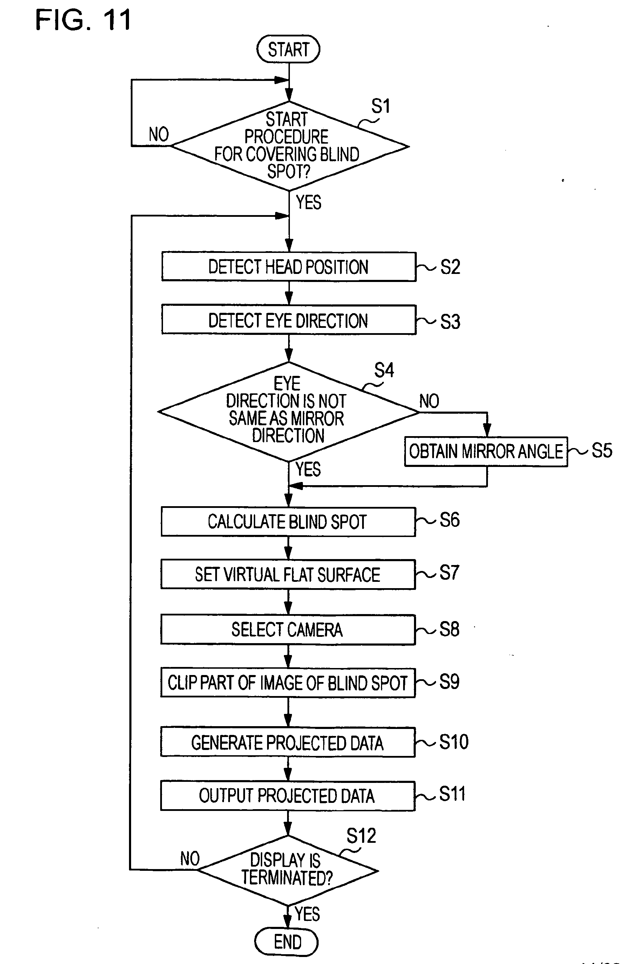

Next, procedures according to the current embodiment will be described with reference to FIG. 11. First, the system control section 10 determines whether a procedure for covering a blind spot should be started (Step S1). The system control section 10 determines that the procedure for covering a blind spot should be started when the system starting switch SW1 described above is operated, when the navigation ECU 6 detects that the vehicle C1 changes traffic lanes, or when the navigation ECU 6 determines that the vehicle C1 approaches to an intersection or a curve. Meanwhile, it may be possible to start the procedure for covering a blind spot when the shift position of the vehicle C1 is reversed. Further, it may be possible to start the procedure for covering a blind spot when the driver's eye direction has moved a predetermined angle away from the travel direction of the vehicle.

When the system control section 10 determines that the procedure for covering a blind spot should be started (Step S1=YES), the system is activated and initialized, and the driver's head position is detected (Step S2). The head position detecting section 11 inputs the detecting signal from the head detecting sensor 3 and calculates the driver's head position DH.

The eye direction detecting section 12 detects the driver's eye direction (Step S3) and determines whether the driver's eye direction faces to any direction other than the direction toward the rear-view mirror M (Step S4). As described above, for example, when the driver's eye direction is included within a predetermined angle range whose center is the travel direction of the vehicle C1 as the basis for the length direction of the vehicle C1, it is determined that the driver faces forward. When the driver's eye direction is not included within the predetermined angle range, that is, when the driver faces backward of the vehicle, it is further determined whether the driver's eye direction is included within a predetermined angle range whose center is the anti-travel direction of the vehicle C1. When the driver's eye direction is included in the predetermined angle whose center is the anti-travel direction of the vehicle C1, it is determined that the driver looks at the area behind the vehicle. When an elevation angle of the driver's eye direction is equal to or greater than a predetermined angle and when the driver's eye direction is toward the rear-view mirror M, it is determined that the driver looks at the rear-view mirror M.

In Step S4, when it is determined that the driver's eye direction faces toward the rear-view mirror M (Step S4=NO), the blind spot calculating section 13 obtains the mirror angle including an angle of rotation θ and a declination angle φ from the mirror angle sensor 7 (Step S5). When the driver's eye direction faces toward any direction other than the rear-view mirror M (Step S4=YES), the procedure goes to Step S6.

In Step S6, the blind spot calculating section 13 calculates an area which is hidden as a blind spot arising because of the presence of the pillar P on the basis of the driver's eye direction (Step S6). When it is determined in Step S3 that the driver faces forward, the pillar attribute data 18a of the front pillars PA1 and PA2 is read out from the attribute data storage section 18 and the coordinates of the areas B1 and B2 which are hidden as blind spots arising because of presence of the front pillars PA1 and PA2 are calculated as shown in FIG. 3.

When it is determined in Step S3 that the driver looks backward, the blind spot calculating section 13 reads out the pillar attribute data 18a corresponding to the center pillars PB1 and PB2 and the rear pillars PC1 and PC2 from the attribute data storage section 18 and calculates the coordinates of the areas B3 through B6 which are hidden as blind spots arising because of the presence of those pillars as shown in FIG. 6.

When it is determined in Step S3 that the driver looks toward the rear-view mirror M, the blind spot calculating section 13 calculates the range of view A1 which is an area the driver is able to look at in the rear-view mirror M on the basis of the mirror angle and the driver's head position DH which has been obtained in Step S5. Then it is determined whether the center pillars PB1 and PB2 and the rear pillars PC1 and PC2 are included within the range of view A1. Further, a blind spot area in the mirror BM which is hidden as a blind spot in the mirror arising because of the presence of the pillar(s) within the range of view A1 is calculated on the basis of the pillar attribute data 18a.

After the blind spot area B or the blind spot area in the mirror BM is calculated, the virtual flat surface setting section 16 sets the virtual flat surface VP on the basis of the driver's eye direction and the mirror angle as described above (Step S7). That is, the virtual flat surface VP is set at a position which is a predetermined distance away from the vehicle C1, at a position of a reference object such as a pedestrian crosswalk, or at a position of the other vehicle C2 locating behind the vehicle C1. The virtual flat surface setting section 16 further sets the position of the area photographed by the camera CP on the basis of the position of the virtual flat surface VP and outputs the set position to the image data obtaining section 14.

The image data obtaining section 14 selects one camera which obtains the image data G on the basis of the eye direction detecting section 12 and obtains the image data G which is the image of the area which is hidden as a blind spot arising because of the presence of the pillar P (Step S8). When the driver looks forward, the image data G is obtained from the front cameras 4AL and 4AR. When the driver looks backward, the image data G is obtained from the side cameras 4BL and 4BR and the rear cameras 4CL and 4CR. When the driver looks at the area behind the vehicle C1 and the rear side area of the vehicle C1 through the rear-view mirror M, the image data G is obtained from the blind spot camera(s) 4 which corresponds to the pillar(s) P including within the range of view A1 of the rear-view mirror M.

After the image data G is obtained, the image converting section 15 clips part of the image of the blind spot on the basis of the blind spot area B or the blind spot area in the mirror BM which was calculated in Step S6 from the image data G (Step S9). The image converting section 15 generates projected data to be output to the projector 20 (Step S10). Specifically, as described above, the image converting section 15 converts the image of the blind spot to project it on the virtual flat surface VP and the image is further converted on the basis of the position of the target pillar P to be projected and the 3D shape of the target pillar P. One projector 20 is selected to project the image on the target pillar P and the image is converted into coordinate values on the basis of the position of the selected projector 20. The projected image outputting section 17 reads the image which has been converted into coordinate values in the image display range Z1 of the mask pattern 18b.

After the projected data is generated, the projected image outputting section 17 outputs the projected data to the selected projector 20 (Step S11). When the driver looks forward, the projected data is output to the front projector 20A. When the driver looks backward, the projected data is output to the side projector 20B and the rear projector 20C. When the driver looks at the area behind the vehicle C1 or the rear side area surrounding the vehicle C1 through the rear-view mirror M, the projected data is output to the pillar P which corresponds to the driver's eye direction.

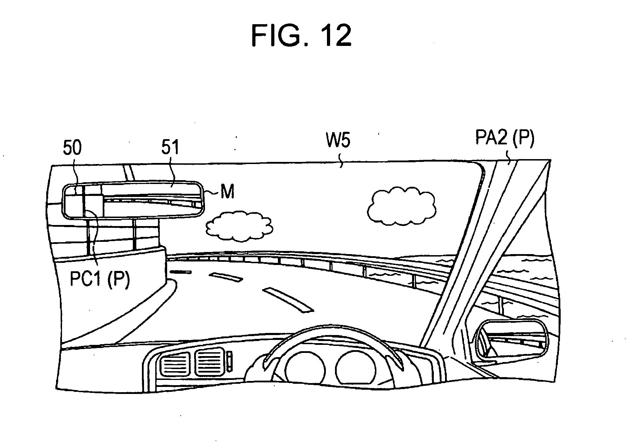

When the driver looks at the area behind the vehicle C1 or the rear side area surrounding the vehicle C1 through the rear-view mirror M and when the left rear pillar PC1 is included within the range of view A1 of the rear-view mirror M, the rear projector 20C projects the blind spot image on the left rear pillar PC1. Therefore, for example, a blind spot image 50 which is projected on the left rear pillar PC1 is shown in the rear-view mirror M as shown in FIG. 12. Therefore, the driver may see the area which is hidden as a blind spot arising because of the presence of the left rear pillar PC1 as the blind spot image 50, so that the driver may check whether the other vehicle C2 exists behind the vehicle C1. The blind spot image 50 is displayed in the rear-view mirror M, depending on the driver's eye direction, so that the real view and a view in the rear-view mirror M 51 are matched with each other and no twisted.

When the blind spot image is projected, the system control section 10 determines whether the display should be terminated (Step S12). For example, when a predetermined time period elapses since the system starting switch SW1 is operated, when the vehicle C1 has been changed traffic lanes, when the vehicle C1 has passed an intersection or a curve, when the driver's eye direction moved to within a predetermined angle range whose center is the travel direction of the vehicle, or when the shift position of the vehicle C1 is switched to other than "reverse", it is determined that the display should be terminated. When it is determined that the display should be terminated (Step S12=YES), the procedure is terminated.

Meanwhile, when it is determined that the display should not be terminated yet in Step S12 (Step S12=NO), the procedure goes back to Step S2 and the procedures in Steps S2 through S11 are repeated. When the driver's head position DH and/or the driver's eye direction are changed, the image to be displayed is changed on the basis of the newly detected head position DH and/or the eye direction.

According to the embodiment described above, following advantages may be provided.

1) According to the current embodiment, even when there is an area which is hidden as a blind spot arising because of the presence of the pillar P in the rear-view mirror M, the area in the mirror BM which is hidden as a blind spot arising because of the presence of the pillar P is calculated on the basis of the driver's head position DH, the driver's eye direction, and the mirror angle. Then an area which corresponds to the area in the mirror BM which is hidden as a blind spot arising because of the presence of the pillar P is clipped from the image data G which is obtained from the blind spot camera 4 and the blind spot image 50 is output on the medial surface of the pillar P. Therefore, when the driver looks at the area surrounding the vehicle C1 through the rear-view mirror M, it may be possible to cover the area which is hidden as a blind spot arising because of the presence of the pillar P.

2) According to the current embodiment, the blind spot image 50 is displayed on the pillar P which is included within the range of view A1 in the rear-view mirror M. Therefore, calculating processing and display processing for the blind spot area in the mirror BM corresponding to any of the pillars P which are not included within the range of view A1 are omitted, so that it may be possible to reduce the processing load of the driving support system 1.

3) According to the current embodiment, when the navigation ECU 6 determines that the vehicle C1 changes traffic lanes, the procedure for covering a blind spot arising because of the presence of the pillar P is started. Therefore, when the driver looks at the area behind the vehicle C1 or the area in the rear side of the vehicle C1 through the rear-view mirror M, the driver may check whether there is any other vehicle C2 behind of the vehicle C1 or in rear side of the vehicle C1.

4) According to the current embodiment, when the obstacle detecting sensor 8 detects the other vehicle C2 behind the vehicle C1, the virtual flat surface VP is set at the position of the other vehicle C2. Therefore, it may be possible to project a clear image of an area whose center is the other vehicle C2 on the medial surface of the pillar P.

Note that, the embodiment described above may be modified as follows.

* According to the embodiment described above, the head detecting sensor 3 is an ultrasound sensor. However, another sensor such as an image recognition sensor may be used instead. Further, a plurality of the head detecting sensor 3 is mounted near the driver's seat according to the current embodiment. However, only one head detecting sensor may be mounted. Further, the driver's head position may be detected by detecting a position of a head rest of the driver's seat or a position of the driver's seat.

* According to the embodiment described above, the driver's head position DH is detected by the head detecting sensor 3. However, a position of another site in the driver's body (for example, a position of the driver's eye) may be detected as the position of the driver.

* According to the embodiment described above, the virtual flat surface VP may be set at a position of any reference object other than the pedestrian crosswalk. For example, the virtual flat surface VP may be set at a position of an object which is installed on the road surface such as a traffic light. For example, when the vehicle C1 has a radar or a sensor for calculating a relative distance between the vehicle C1 and an obstacle which is located in front of the vehicle C1 and when the radar or the sensor detects the obstacle such as a pedestrian, a bicycle, or another vehicle, the virtual flat surface VP may be set at a position of such a detected obstacle. Note that, to determine whether the detected obstacle is a pedestrian or a bicycle, a heretofore known image processing such as a feature detection processing may be used.

* According to the embodiment described above, a plurality of the blind spot camera 4 may be mounted for one pillar P and capture images of the area which is hidden as a blind spot arising because of the presence of the pillar P from difference angles.

* According to the embodiment described above, the projector 20 is mounted on the medial surface of the roof R of the vehicle C1. However, the projector 20 may be set at any position if the projector 20 is able to project the image on the medial surface of the pillar P. For example, the projector 20 may be set on the upper of the dash of the vehicle C1 or at any another position.

* According to the embodiment described above, when it is determined that the driver looks forward, the images are projected on the front pillars PA1 and PA2. However, the one image may be projected on only one of the pillars P. For example, the image may be projected on the right front pillar PA2 which is closer to the driver or the pillar P on which the image is projected may be appropriately changed on the basis of the driver's eye direction.

* According to the embodiment described above, when the driver looks at the area behind of the vehicle C1 or the area in the rear side of the vehicle C1, the images are projected on the center pillars PB1 and PB2 and the rear pillars PC1 and PC2. However, the one image may be projected on only one of the pillars P. For example, the projection of the images on the center pillars PB1 and PB2 may be omitted or the pillar P on which the image is projected may be appropriately changed on the basis of the driver's eye direction.

* According to the embodiment described above, when at least one pillar among the center pillars PB1 and PB2 and the rear pillars PC1 and PC2 is shown in the rear-view mirror M, the blind spot calculating section 13 calculates the area which is hidden as a blind spot arising because of the presence of the pillar P. However, when it is determined that the driver looks toward the rear-view mirror M, it may be possible to project images on all of the center pillars PB1 and PB2 and the rear pillars PC1 and PC2 on the basis of the driver's eye direction and the driver's head position.

* According to the embodiment described above, the projector 20 projects the image on the medial surface Pa of the pillar P. However, a flat-screen display as display means may be mounted on the medial surface of the pillar P and the blind spot image 50 may be output in the display.

## Claims

1. A driving support method for capturing an image of an area which is hidden as a blind spot (B1-B6) for a driver of a vehicle (C1) arising because of a presence of a pillar (PA1, PA2, PB1, PB2, PC1, PC2) in the vehicle (C1) by using imaging means (4) which is attached to the vehicle (C1) and for displaying an image corresponding to the blind spot area (B1-B6) on an inner surface (SC) of the pillar, comprising:
detecting (S2) a position of the driver;
obtaining (S5) an angle of a mirror (M) which is mounted in the vehicle (C1);
calculating (S6) an area which is hidden as a blind spot for the driver of the vehicle (C1) arising because of the presence of a pillar (PA1, PA2, PB1, PB2, PC1, PC2) of the vehicle in the mirror (M) on the basis of the position of the driver and the angle of the mirror (M), provided that the driver is looking at an area surrounding the vehicle (C1) through the mirror (M); and
displaying (S11) an image corresponding to the calculated blind spot area (B1-B6) on the pillar (PA1, PA2, PB1, PB2, PC1, PC2) from image data which is captured by the imaging means (4).

2. A driving support apparatus for capturing an image of an area which is hidden as a blind spot (B1-B6) for a driver of a vehicle (C1) arising because of a presence of a pillar (PA1, PA2, PB1, PB2, PC1, PC2) of the vehicle (C1) by using an imaging means (4) which is attached to the vehicle (C1) and for displaying an image which is provided by the imaging means (4) on an inner surface (SC) of the pillar (PA1, PA2, PB1, PB2, PC1, PC2) by display means (20), comprising:
a driver's position detecting means (3) for detecting a position of the driver;
a mirror position detecting means (7) for detecting an angle of a mirror (M) which is mounted in the vehicle (C1);
a blind spot calculating means (13) for calculating an area (B1-B6) which is hidden as a blind spot for the driver of the vehicle (C1) arising because of the presence of the pillar (PA1, PA2, PB1, PB2, PC1, PC2) in the mirror (M) on the basis of the position of the driver and the angle of the mirror, provided that the driver is looking at an area surrounding the vehicle (C1) through the mirror (M);
image synthesis means for generating an image of a blind spot corresponding to the area in the mirror (M), using image data provided by the imaging means (4); and
image outputting means (17) for outputting the image of the blind spot to the display means.

3. The driving support apparatus according to Claim 2, further comprising:
range of view calculating means for calculating a range of view which the driver is able to see through the mirror (M) on the basis of the position of the driver and the angle of the mirror (M), wherein
the blind spot calculating means (13) determines which pillar (PA1, PA2, PB1, PB2, PC1, PC2) is located within the range of view and calculates the area (B1-B6) which is hidden as a.blind spot of the driver of the vehicle (C1) arising because of the presence of the pillar (PA1, PA2, PB1, PB2, PC1, PC2) on the basis of the position of the driver and the angle of the mirror; and
the image outputting means (17) displays the image of the blind spot on the pillar (PA1, PA2, PB1, PB2, PC1, PC2).

4. The driving support apparatus according to Claim 2 or Claim 3, further comprising:
vehicle condition determining means for determining whether the vehicle changes traffic lanes (L1), wherein
provided that the vehicle condition determining means determines that the vehicle (C1) is changing traffic lanes (L1), the image of the blind spot corresponding to the area (B1-B6) which is hidden as a blind spot for the driver of the vehicle (C1) arising because of the presence of the pillar in the mirror (M) is output on the pillar (PA1, PA2, PB1, PB2, PC1, PC2).

5. The driving support apparatus according to any one of Claims 2 to 4, further comprising:
obstacle detecting means (8) for detecting an obstacle (C2) which is located behind the vehicle (C1) or to the rear of the vehicle (C1), wherein
provided that the obstacle detecting means (8) detects an obstacle (C2) which is located behind the vehicle (C1) or to the rear side of the vehicle (C1), the image synthesis means sets a virtual flat surface (VP) at a position of the detected obstacle (C2) to convert the image data into coordinate values on the virtual flat surface (VP) and to generate the image of the blind spot based on the coordinate values.

## Patentansprüche

1. Fahrunterstützungsverfahren zum Erfassen eines Bilds eines Bereichs, der für einen Fahrer eines Fahrzeugs (C1) als toter Winkel (B1-B6), der durch das Vorhandensein einer Säule (PA1, PA2, PB 1, PB2, PC1, PC2) in dem Fahrzeug (C1) hervorgerufen wird, verborgen ist, unter Verwendung eines Bildgebungsmittels (4), das an dem Fahrzeug (C1) angebracht ist, und zum Anzeigen eines Bilds, das dem toten Winkelbereich (B 1-B6) entspricht, auf einer inneren Oberfläche (SC) der Säule, enthaltend:
Detektieren (S2) einer Position des Fahrers;
Beziehen (S5) eines Winkels eines Spiegels (M), der in dem Fahrzeug (C1) montiert ist;
Berechnen (S6) eines Bereichs, der für den Fahrer des Fahrzeugs (C1) als toter Winkel, aufgrund des Vorhandenseins einer Säule (PA1, PA2, PB1, PB2, PC1, PC2) des Fahrzeugs in dem Spiegel (M) verborgen ist, basierend auf der Position des Fahrers und des Winkels des Spiegels (M), vorausgesetzt, dass der Fahrer mittels des Spiegels (M) zu einem Bereich, der das Fahrzeug (C1) umgibt, blickt; und
Anzeigen (S11) eines Bilds, das dem berechneten toten Winkelbereich (B1-B6) entspricht, auf der Säule (PA1, PA2, PB1, PB2, PC2, PC2), für Bilddaten, die von dem Bildgebungsmittel (4) erfasst worden sind.

2. Fahrunterstützungsvorrichtung zum Erfassen eines Bilds eines Bereichs, das für einen Fahrer eines Fahrzeugs (C1) als toter Winkel (B1-B6), aufgrund eines Vorhandenseins einer Säule (PA1, PA2, PB1, PB2, PC1, PC2) des Fahrzeugs (C1), verborgen ist, unter Verwendung eines Bildgebungsmittels (4), das an dem Fahrzeug (C1) angebracht ist, und zum Anzeigen eines Bilds, das von dem Bildgebungsmittel (4) auf einer inneren Oberfläche (SC) der Säule (PA1, PA2, PB1, PB2, PC1, PC2) bereitgestellt ist, durch ein Anzeigemittel (20), enthaltend:
ein Fahrerpositionsdetektionsmittel (3) zum Detektieren einer Position des Fahrers;
ein Spiegelpositionsdetektionsmittel (7) zum Detektieren eines Winkels eines Spiegels (M), der in dem Fahrzeug (C1) montiert ist;
ein toter-Winkel-Berechnungsmittel (13) zum Berechnen eines Bereichs (B1-B6), der für den Fahrer des Fahrzeugs (C1) als toter Winkel, aufgrund des Vorhandenseins der Säule (PA1, PA2, PB1, PB2, PC1, PC2), in dem Spiegel (M) verborgen ist, basierend auf der Position des Fahrers und des Winkels des Spiegels, vorausgesetzt, dass der Fahrer mittels des Spiegels (M) zu einem Bereich, der das Fahrzeug (C1) umgibt, blickt;
ein Bildsynthesemittel zum Erzeugen eines Bilds von einem toten Winkel, das dem Bereich in dem Spiegel (M) entspricht, unter Verwendung von Bilddaten, die durch das Bildgebungsmittel (4) bereitgestellt werden; und
ein Bildausgabemittel (17) zum Ausgeben des Bilds des toten Winkels auf dem Anzeigemittel.

3. Fahrunterstützungsvorrichtung nach Anspruch 2, ferner mit
einem Betrachtungsbereichberechnungsmittel zum Berechnen eines Betrachtungsbereichs, den der Fahrer mittels des Spiegels (M) sehen kann, basierend auf der Position des Fahrers und des Winkels des Spiegels (M), wobei
das toter-Winkel-Berechnungsmittel (13) bestimmt, welche Säule (PA1, PA2, PB1, PB2, PC1, PC2) sich innerhalb des Betrachtungsbereichs befindet, und den Bereich (B1-B6) berechnet, der im toten Winkel für den Fahrer des Fahrzeugs (C1), aufgrund des Vorhandenseins der Säule (PA1, PA2, PB1, PB2, PC1, PC2) verborgen ist, basierend auf der Position des Fahrers und des Winkels des Spiegels; und
das Bildausgabemittel (17) das Bild des toten Winkels auf der Säule (PA1, PA2, PB1, PB2, PC1, PC2) zeigt.

4. Fahrunterstützungsvorrichtung nach Anspruch 2 oder 3, ferner mit
einem Fahrzeugzustandsbestimmungsmittel zum Bestimmen, ob das Fahrzeug Verkehrsfahrspuren (L1) wechselt, wobei
vorausgesetzt, dass das Fahrzeugzustandsbestimmungsmittel bestimmt, dass das Fahrzeug (C1) Verkehrsfahrspuren (L1) wechselt, das Bild des toten Winkels, das dem Bereich (B1-B6) entspricht, der für den Fahrer des Fahrzeugs (C1) als toter Winkel, aufgrund des Vorhandenseins der Säule in dem Spiegel (M1), verborgen ist, auf der Säule (PA1, PA2, PB1, PB2, PC1, PC2) ausgegeben wird.

5. Fahrunterstützungsvorrichtung nach einem der Ansprüche 2 bis 4, ferner mit
einem Hindernisdetektionsmittel (8) zum Detektieren eines Hindernisses (C2), das sich hinter dem Fahrzeug (C1) oder am Heckbereich des Fahrzeugs (C1) befindet, wobei
vorausgesetzt, dass das Hindernisdetektionsmittel (8) ein Hindernis (C2) detektiert, das sich hinter dem Fahrzeug (C1) oder am Heckbereich des Fahrzeugs (C1) befindet, das Bildsynthesemittel eine virtuelle flache Fläche (VP) an einer Position des detektierten Hindernisses (C2) setzt, um die Bilddaten in Koordinatenwerte auf der virtuellen flachen Fläche (VP) umzuwandeln und das Bild des toten Winkels basierend auf den Koordinatenwerten zu berechnen.

## Revendications

1. Procédé d'assistance à la conduite pour capturer une image d'une zone qui est cachée en tant que tache aveugle (B1-B6) pour le conducteur d'un véhicule (C1), apparaissant en raison de la présence d'une colonne (PA1, PA2, PB1, PB2, PC1, PC2) dans le véhicule (C1) en utilisant des moyens d'imagerie (4) qui sont fixés au véhicule (C1) et pour afficher une image correspondant à la zone de tache aveugle (B1-B6) sur une surface interne (SC) de la colonne, comprenant les étapes consistant à :
détecter (S2) une position du conducteur ;
obtenir (S5) l'angle d'un miroir (M) qui est monté
dans le véhicule (C1) ;
calculer (S6) une zone qui est cachée en tant que
tache aveugle pour le conducteur du véhicule (C1), apparaissant en raison de la présence d'une colonne (PA1, PA2, PB1, PB2, PC1, PC2) du véhicule dans le miroir (M) sur la base de la position du conducteur et de l'angle du miroir (M), à condition que le conducteur regarde une zone entourant le véhicule (C1) à travers le miroir (M) ; et
afficher (S11) une image correspondant à la zone de
tache aveugle calculée (B1-B6) sur la colonne (PA1, PA2, PB1, PB2, PC1, PC2) à partir de données d'image qui sont capturées par les moyens d'imagerie (4).

2. Appareil d'assistance à la conduite pour capturer une image d'une zone qui est cachée en tant que tache aveugle (B1-B6) pour le conducteur d'un véhicule (C1), apparaissant en raison de la présence d'une colonne (PA1, PA2, PB1, PB2, PC1, PC2) du véhicule (C1) en utilisant des moyens d'imagerie (4) qui sont fixés au véhicule (C1) et pour afficher une image qui est fournie par les moyens d'imagerie (4) sur une surface interne (SC) de la colonne (PA1, PA2, PB1, PB2, PC1, PC2) par des moyens d'affichage (20), comprenant :
des moyens (3) de détection de la position du
conducteur pour détecter la position du conducteur ;
des moyens (7) de détection de la position du miroir
pour détecter l'angle d'un miroir (M) qui est monté dans le véhicule (C1) ;
des moyens (13) de calcul de tache aveugle pour
calculer une zone (B1-B6) qui est cachée en tant que tache aveugle pour le conducteur du véhicule (C1), apparaissant en raison de la présence de la colonne (PA1, PA2, PB1, PB2, PC1, PC2) dans le miroir (M) sur la base de la position du conducteur et de l'angle du miroir, à condition que le conducteur regarde une zone entourant le véhicule (C1) à travers le miroir (M),
des moyens de synthèse d'image pour générer une image
d'une tache aveugle correspondant à la zone dans le miroir (M), en utilisant des données d'image fournies par les moyens d'imagerie (4) ; et
des moyens (17) de sortie d'image pour délivrer
l'image de la tache aveugle aux moyens d'affichage.

3. Appareil d'assistance à la conduite, selon la revendication 2,
comprenant en outre :
des moyens de calcul de portée de vision pour calculer
une portée de vision à laquelle le conducteur peut observer à travers le miroir (M) sur la base de la position du conducteur et de l'angle du miroir (M), dans lequel :
les moyens (13) de calcul de tache aveugle déterminent
quelle colonne (PA1, PA2, PB1, PB2, PC1, PC2) est située dans la portée de vision et calcule la zone (B1-B6) qui est cachée en tant que tache aveugle pour le conducteur du véhicule (C1) en raison de la présence de la colonne (PA1, PA2, PB1, PB2, PC1, PC2) sur la base de la position du conducteur et de l'angle du miroir ; et
les moyens (17) de sortie d'image affichent l'image de
la tache aveugle sur la colonne (PA1, PA2, PB1, PB2, PC1, PC2).

4. Appareil d'assistance à la conduite selon la revendication 2 ou la revendication 3, comprenant en outre :
des moyens de détermination de l'état du véhicule pour
déterminer si le véhicule change de voie de circulation (L1), dans lequel :
à condition que les moyens de détermination de l'état
du véhicule déterminent que le véhicule (C1) change de voie de circulation (L1), l'image de la tache aveugle correspondant à la zone (B1-B6) qui est cachée en tant que tache aveugle pour le conducteur
du véhicule (C1), apparaissant en raison de la
présence de la colonne dans le miroir (M) est délivrée sur la colonne (PA1, PA2, PB1, PB2, PC1, PC2).

5. Appareil d'assistance à la conduite selon l'une quelconque des revendications 2 à 4, comprenant en outre :
des moyens (8) de détection d'obstacle pour détecter
un obstacle (C2), qui est situé derrière le véhicule (C1) ou à l'arrière du véhicule (C1), dans lequel :
à condition que les moyens (8) de détection d'obstacle
détectent un obstacle (C2) qui est situé derrière le véhicule (C1) ou sur le côté arrière du véhicule (C1), les moyens de synthèse d'image règlent une surface plate virtuelle (VP) dans une position de l'obstacle détecté (C2) pour convertir les données d'image en valeurs de coordonnées sur la surface plate virtuelle (VP) et pour générer l'image de la tache aveugle sur la base des valeurs de coordonnées.
